# EUROPEAN PATENT SPECIFICATION

(11) **EP 2 625 028 B1**
(45) Date of publication and mention of the grant of the patent: **14.09.2016**
(21) Application number: 11781627.2
(22) Date of filing: 07.10.2011
(51) Int. Cl.: B29D 30/06, B60C 5/01

(54) **TYRE FOR WHEELS OF AGRICULTURAL MACHINES**
REIFEN FÜR RÄDER FÜR LANDWIRTSCHAFTLICHE MASCHINEN
BANDAGE POUR ROUES DE MACHINES AGRICOLES

(30) Priority: 08.10.2010 IT MO20100283
(43) Date of publication of application: 14.08.2013
(73) Proprietor: Mecaplast di Conti Emanuele E C. S.A.S., 42021 Ghiardo di Bibbiano (RE) (IT)
(72) Inventor: CONTI, Emanuele, I-42021 Ghiardo di Bibbiano (RE) (IT)
(74) Representative: Marcio', Paola
(86) International application number: PCT/IB2011/054420
(87) International publication number: WO 2012/046209

(56) References cited:
- EP-A1- 0 251 922
- EP-A2- 1 749 855
- WO-A1-01/17800
- WO-A1-2005/082608
- FR-A1- 2 244 619
- FR-A1- 2 850 607
- FR-A1- 2 913 916
- GB-A- 1 034 336
- JP-A- 3 253 402
- US-A- 4 049 767
- US-A1- 2004 261 925

## Description

The present invention relates to a tyre for vehicle wheels provided with an inner cavity, the function of which is to confer elasticity and deformability to the tyre, but which is not intended for receiving an air chamber or a pressurised fluid.

This type of tyre in mainly used in agricultural machines, in particular on operating wheels of agricultural machines such as, for example, seed-drilling machines. These operating wheels are not intended for driving the machine, but are intended for performing different functions such as, for example, pressing seeds into the ground and pushing the seeds to a depth in the ground, covering seeds arranged on the ground with earth and pressing the ground thereabove.

In agricultural machines for seed-drilling, for the aforesaid operating wheels the use of vulcanised rubber tyres is known, which tyres are fitted to rims made of plastics or metal.

From the prior art, making the aforesaid tyres from a mixture of rubber, sulphur and various additives is known, said mixture being drawn or injected into a mould and then vulcanised. In the case of drawing, a tubular element is obtained, the ends of which are welded together to obtain the tyre.

The vulcanisation process increases elasticity and resistance of the rubber, nevertheless, the tyres that are thus obtained have numerous drawbacks.

First of all, tyres made of vulcanised rubber are subject to rapid wear that requires frequent replacements of the tyres, which involve stopping the machine, with consequent loss of productivity and an increase in maintenance costs.

Further, tyres made of vulcanised rubber have uneven flexibility, which affects the quality of the tyre. In fact, in the case of tyres obtained by injection moulding, in the zones corresponding to the points in which the mixture is injected into the mould, zones of greater hardness are formed that alter locally the flexibility of the tyre. Also in the case of tyres obtained by drawing, at the weld a zone of greater hardness forms that alters locally the flexibility of the tyre.

Further, tyres made of vulcanised rubber are not recyclable once they have to be replaced, thus constituting a type of waste that it is difficult to dispose of.

FR 2244619 A discloses a tyre for vehicle wheels, in particular for motor vehicles such as, for example, cars and trucks, obtained by means of a vulcanization process for rubber, in particular thermoplastic polyurethane. Said tyre includes at least one plastic reinforcing member formed by introducing a hot thermoplastic material into a mould and allowing the material to solidify by cooling, the mould being shaped to provide a reinforcing member comprising a tread member having the form of a mesh of crossing strands, two beads of smaller diameter than the tread member and two series of further strands, the strands of each series being connected at one end to a respective one of the beads and branching at the other end into strands of the tread member.

Said tyre is toroidally shaped and has an inner cavity which has to be inflated and, for this reason, the air tightness of the tyre must be guaranteed during use.

The present invention proposes supplying a tyre for vehicle wheels, in particular for agricultural vehicles, provided with an inner cavity, that does not have the aforementioned drawbacks.

The object of the present invention is achieved with a tyre for vehicle wheels provided with an inner cavity according to claim 1.

Preferred embodiments of the invention are defined in the dependent claims.

Owing to the invention, it is possible to obtain tyres for operating wheels of agricultural machines, which are easily recyclable, have great resistance to the stresses to which they are subjected in use, with consequent great duration, are light and are of consistently high quality.

Further advantages and features of the invention will emerge from the following description, which is provided purely by way of non-limiting example, with reference to the attached drawings, in which:
Figure 1 is a plan view of a tyre made according to the invention;
Figure 2 is the section A-A in Figure 1;
Figure 3 is a partially sectioned view of a mould for making tyres according to the invention;
Figure 4 is a top view of the mould in Figure 3, that is open and in the moulding position;
Figure 5A and Figure 5B are views of the mould in Figure 4 in a first extracting step of a tyre at the end of moulding;
Figures 6A and 6B are views like that of Figures 5A and 5b, relating to a second extracting step of the tyre at the end of moulding;
Figure 7A and 7B are section views of a first embodiment of a tyre according to the invention;
Figures 8A and 8B are section views of a second embodiment of a tyre according to the invention;
Figures 9A and 9B are section views of a third embodiment of a tyre according to the invention.

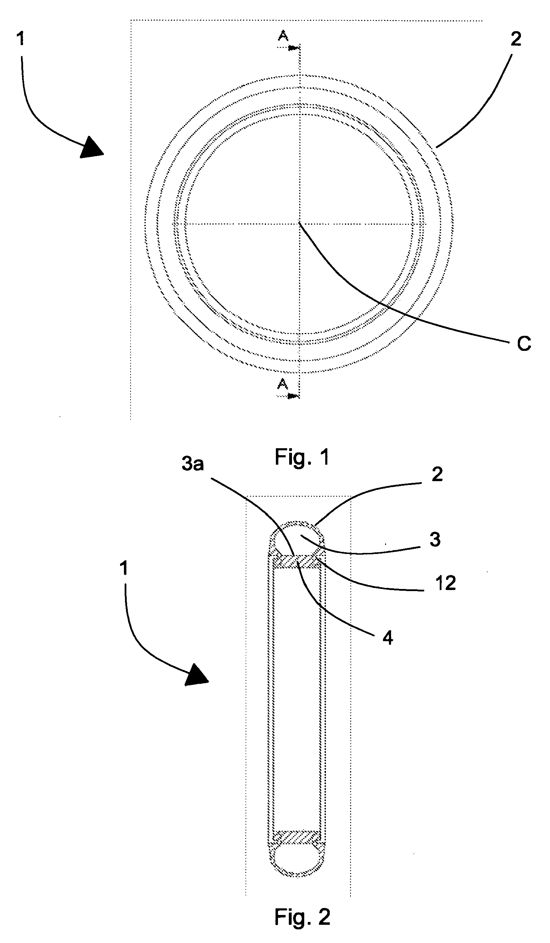

In Figures 1 and 2 there is illustrated a tyre 1 according to the invention for operating wheels of agricultural machines, in particular for seed-drilling agricultural machines. The tyre 1 according to the invention consists of a body 2 of toroidal shape, in which a cavity 3 is defined provided with an opening 3a facing the centre C of said toroidal shape, i.e. the inner side of the toroidal shape opposite the side intended for coming into contact with the ground during use of the tyre in said seed-drilling agricultural machines. The body 2 comprises a bead 12 intended for being coupled with the rim of the wheel on which the tyre 1 is fitted. The tyre 1 is completed by a closing element 4 of annular shape, shaped in such a manner as to be coupled with the cavity 3 to close the cavity 3. The closing element 4 is fixed to the body 2 of the tyre by gluing or welding. As fixing occurs on the inner side of the toroidal profile of the body 2, the outer side, which, in use, comes into contact with the ground and subject to mechanical stresses connected to the use thereof, does not have zones with altered elasticity due to the presence of injection or welding points. This ensures homogenous flexibility over the entire profile, reducing the risk that during use of the tyre abrasions or also breaks may occur and facilitates the removing of the wet earth that may stick to the tyre during use, preventing the risk of accumulation of earth on the tyre and also on the entire wheel, which would require a stop of working and a special wheel-cleaning operation, with an inevitable increase in costs and downtime and reduction in productivity.

The body and the closing element 4 are made of materials chosen from thermoplastic polyurethane (TPU), thermoplastic elastomers (TPE), polyvinyl chloride (PVC), SEBS, or similar materials classified on the Shore A and Shore B hardness scales.

These materials, with which the tyres according to the invention are made, have the significant advantage of all being recyclable materials. In fact, when a worn tyre according to the invention is replaced, it can be shred at low processing cost, to obtain granulated material that can be reused for injection moulding of profiles for the manufacture of new tyres, or products for the most varied applications, which are also completely recyclable, thus enormously lowering the environmental impact compared with that of tyres made of vulcanised rubber.

Other recyclable materials that can be used for making tyres according to the invention are the so-called bioplastics, i.e. biodegradable thermoplastic materials, and in particular the material known by the commercial name APINAT A, manufactured by the Italian company API S.p.A, which is particularly suitable for making tyres according to the invention inasmuch as it has a hardness that is on the Shore A or Shore B hardness scale.

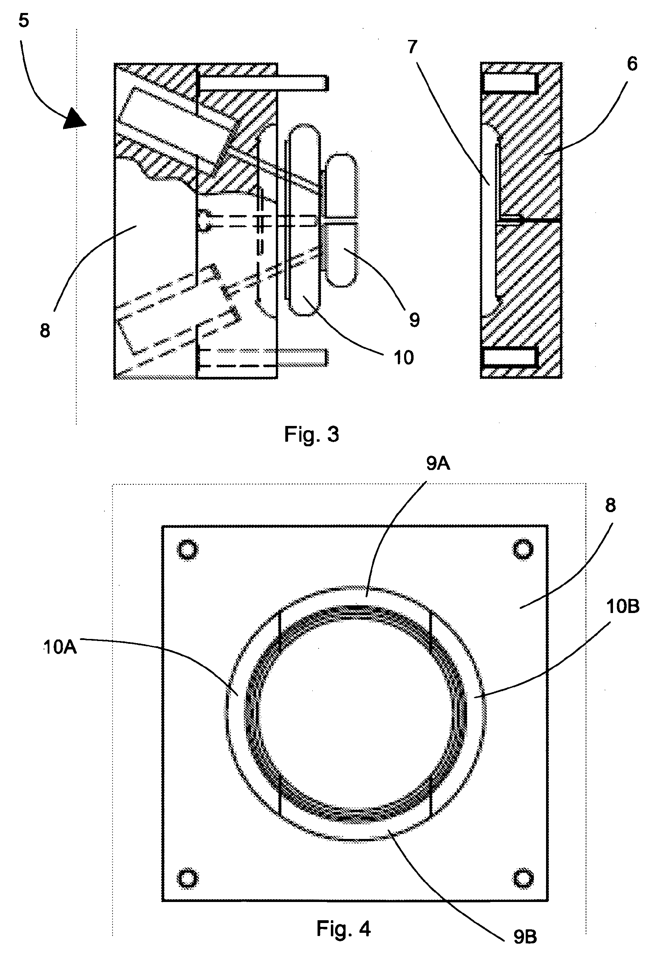

Biodegradable thermoplastic material have the significant advantage of being materials that give rise to easily disposable waste, inasmuch as they can be biodegraded in a short time without leaving long-lasting pollutant residues. In Figures 3, 4, 5A, 5B, 6A, and 6B there is illustrated, by way of non-limiting example, an injection mould 5 for obtaining a tyre 1 according to the invention.

The mould 5 comprises a first half mould 6, in which a cavity 7 is obtained that defines the external shape of the tyre 1, and a second half mould 8 provided with at least one first male element 9 and with at least one second male element 10 that are intended to define, during the moulding step, the cavity 3 of the body 3 of the tyre 1. The first male element 9 and the second male element 10 are movable and decomposable to enable the tyre 1 to be extracted from the mould 5 of the tyre 1 after the injection moulding has been performed.

The first male element 9 consists of a pair of diametrically opposed first arched elements 9a and 9b and the second male element 10 consists of a pair of second arched elements 10a and 10b which are also diametrically opposed.

The first arched elements 9a and 9b and the second arched elements 10a and 10b, during the moulding step of the tyre 1 are arranged inside the mould 5 in a circular configuration, as shown in Figure 4.

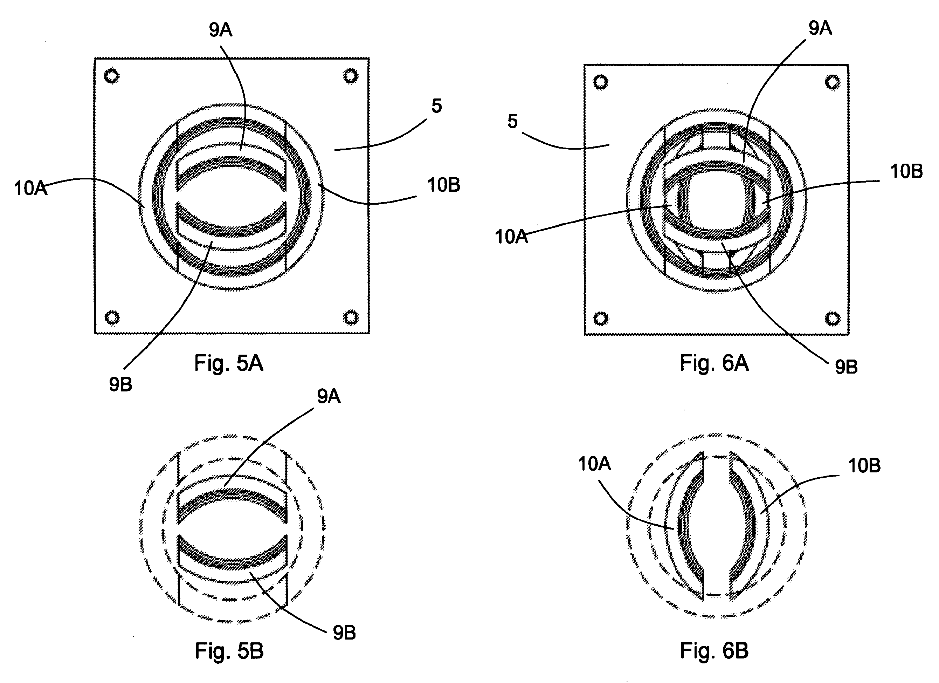

At the end of moulding, when the mould is opened by removing from one another the first half mould 6 and the second half mould 8, the first male element 9 and the second male element 10 are first of all lifted from the second half mould 7 together with the tyre 1. Subsequently, the first arched elements 9a and 9b are moved towards one another, in the direction of the centre of said circular configuration and are raised with respect to the second arched elements 10a and 10b, in such a manner as to disengage from the tyre 1 and enable a similar movement of the second arched elements 10a and 10b. Lastly, also the second arched elements 10a and 10b are moved towards one another, in such a manner as to enable the tyre 1 to be extracted from the mould 5. The movements of the first arched elements 9a and 9b and of the second arched elements 10a and 10b are illustrated in Figures 5A, 5B and 6A, 6B, respectively.

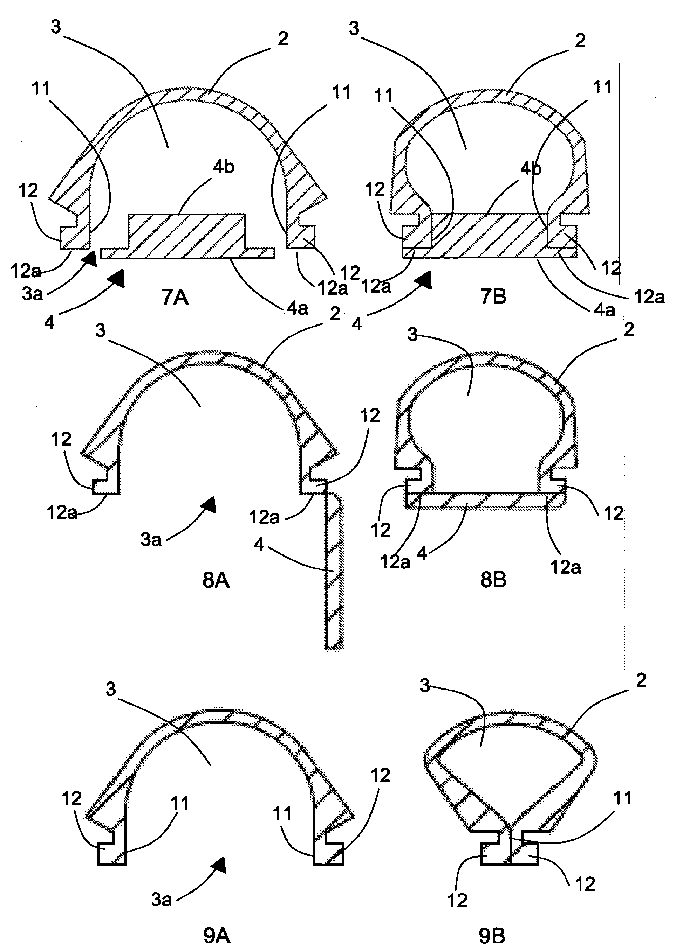

The male elements of the second half mould 7 can be greater than two in number, each male element anyway consisting of a pair of movable arched elements. In Figures 7A, 7B, 8A, 8B, 9A, 9B there are illustrated some embodiments of a tyre 1 according to the invention.

In Figures 7A and 7B there is illustrated a first embodiment of the tyre 1 in which the annular closing element 4 comprises a base 4a and a protruding central portion 4b that is inserted inside the cavity 3 of the body 2 between the inner sides 11 of the bead 12 of the tyre 1 and is fixed, by gluing or welding, to the sides 11 and to the base 12a of the bead 12.

In Figures 8A and 8B there is illustrated a second embodiment of the tyre 1 in which the annular closing element 4 has a constant thickness and is fixed, by gluing or welding, to the base 12a of the bead 12.

In Figures 9A and 9B there is illustrated a third embodiment of a tyre 1. In this embodiment the tyre is devoid of the annular closing element 4. In this case closing of the cavity 3 of the body 2 is obtained by fixing together, by gluing or welding, the inner sides 11 of the bead 12.

In the practical implementation, the materials, dimensions and the constructional details can be different from those indicated, but be technically equivalent thereto without thereby falling outside the scope of the present invention.

## Claims

1. Tyre (1) for operating wheels of agricultural machines wherein said tyre (1) is toroidally shaped, comprising a body (2) provided with an outer side adapted to come into contact with the ground and an inner side adapted to delimit an inner cavity (3), said inner cavity being provided with an opening (3a) facing a centre (C) of said tyre (1) and with a bead (12) intended for being coupled with a rim of a wheel, said opening (3a) being closed by gluing or welding, wherein said body (2) is made of a material chosen from thermoplastic polyurethane (TPU), thermoplastic elastomers (TPE), polyvinyl chloride (PVC), SEBS, bioplastics wherein:
- said outer side does not have zones with altered elasticity due to the presence of injection or welding points; and
- said opening (3a) is closed, directly or indirectly, by means of an annular closing element (4) that is fixed by gluing or welding to said body (2), or by fixing together, by gluing or welding the inner sides (11) of said bead 12).

2. Tyre (1) according to claim 1, wherein said annular closing element (4) is also made of a material chosen from thermoplastic polyurethane (TPU), thermoplastic elastomers (TPE), polyvinyl chloride (PVC), SEBS, bioplastics.

3. Tyre (1) according to any one of claims 1 or 2, wherein said material has a hardness on the Shore A or Shore B hardness scale.

4. Tyre (1) according to any one of clams 1 to 3, wherein said annular closing element (4) has a constant thickness and is fixed to a base (12a) of said bead (12).

5. Tyre (1) according to any one of claims 1 to 3, wherein said annular closing element (4) comprises a base (4a) and a protruding central portion (4b) that is inserted inside said cavity (3) between inner sides (11) of said bead (12) and is fixed to said sides (11) and to a base (12a) of said bead (12).

6. Tyre (1) according to claim 1, **characterised in that** said body (2) is made by injection moulding.

## Patentansprüche

1. Ein Reifen (1) für Betriebsräder von Landwirtschaftsmaschinen, wobei besagter Reifen (1) ringförmig geformt ist, umfassend einen Körper (2), versehen mit einer Außenseite, die angepasst ist, um mit dem Boden in Kontakt zu kommen, und mit einer Innenseite, die angepasst ist, um eine innere Aushöhlung (3) zu begrenzen, wobei besagte innere Aushöhlung mit einer Öffnung (3a) versehen ist, die der Mitte (C) des besagten Reifens (1) zugewandt ist, sowie mit einer Reifenwulst (12), die dazu bestimmt ist, mit einer Felge eines Rads gekoppelt zu werden, wobei besagte Öffnung (3a) durch Kleben oder Verschweißen geschlossen wird, wobei besagter Körper (2) aus einem Material hergestellt ist, das gewählt wird unter thermoplastischen Polyurethanen (TPU), thermoplastischen Elastomeren (TPE), Polyvinylchloriden (PVC), SEBS, Biokunststoffen, wobei:
- besagte Außenseite keine Zonen mit veränderter Elastizität besitzt wegen Vorhandenseins von Einspritz- oder Schweißpunkten; und
- besagte Öffnung (3a) direkt oder indirekt geschlossen ist durch ein ringförmiges Element (4), das durch Kleben oder Verschweißen befestigt ist an besagtem Körper (2) oder durch Kleben oder Verschweißen besagte Innenseiten (11) mit der besagten Reifenwulst (12) miteinander verbindet.

2. Ein Reifen (1) gemäß Anspruch 1, wobei das besagte ringförmige Element (4) auch aus einem Material hergestellt ist, das gewählt wird unter thermoplastischen Polyurethanen (TPU), thermoplastischen Elastomeren (TPE), Polyvinylchloriden (PVC), SEBS, Biokunststoffen.

3. Ein Reifen (1) gemäß einem jeden der Ansprüche 1 oder 2, wobei besagtes Material einen Härtewert auf der Shore-A oder Shore-B Härteskala besitzt.

4. Ein Reifen (1) gemäß einem jeden der Ansprüche von 1 bis 3, wobei besagtes ringförmige Verschlusselement (4) eine konstante Dicke besitzt und an einer Basis (12a) der besagten Reifenwulst (12) befestigt ist.

5. Ein Reifen (1) gemäß einem jeden der Ansprüche von 1 bis 3, wobei das besagte ringförmige Verschlusselement (4) eine Basis (4a) und einen hervorragenden mittleren Teil (4b) umfasst, der in besagte Aushöhlung (3) zwischen den Innenseiten (11) der besagten Reifenwulst (12) eingeführt und an den besagten Seiten (11) und an der Basis (12a) der besagten Reifenwulst (12) befestigt ist.

6. Ein Reifen (1) gemäß Anspruch 1, **gekennzeichnet dadurch, dass** besagter Körper (2) durch Spritzgussverfahren hergestellt ist.

## Revendications

1. Bandage (1) pour roues de manoeuvre de machines agricoles où ledit bandage (1) est de forme toroïdale, comprenant un corps (2) doté d'un côté extérieur adapté pour entrer en contact avec le sol et d'un côté interne adapté pour délimiter une cavité interne (3), ladite cavité interne étant dotée d'une ouverture (3a) face à un centre (C) dudit bandage (1) et d'un talon (12) prévu pour être accouplé à la jante d'une roue, ladite ouverture (3a) étant fermée par collage ou soudage, où ledit corps (2) est réalisé avec un matériau au choix parmi le polyuréthanne thermoplastique (TPU), l'élastomère thermoplastique (TPE), le polychlorure de vinyle (PVC), le SEBS, les plastiques biologiques, où :
- ledit côté externe ne possède aucune zone ayant une élasticité altérée en raison de la présence de points d'injection ou de soudage ; et
- ladite ouverture (3a) est fermée, directement ou indirectement, au moyen d'un élément de fermeture annulaire (4) qui est fixé par collage ou soudage audit corps (2) ou en fixant ensemble, par collage ou soudage, les côtes internes (11) dudit talon (12).

2. Bandage (1) selon la revendication 1, où ledit élément de fermeture annulaire (4) est également réalisé avec un matériau au choix parmi le polyuréthanne thermoplastique (TPU), l'élastomère thermoplastique (TPE), le polychlorure de vinyle (PVC), le SEBS, les plastiques biologiques.

3. Bandage (1) selon l'une des revendications 1 ou 2, où ledit matériau possède une dureté sur l'échelle de dureté Shore A ou Shore B.

4. Bandage (1) selon l'une des revendications 1 à 3, où ledit élément de fermeture annulaire (4) possède une épaisseur constante et peut être fixé à une base (12a) dudit talon (12).

5. Bandage (1) selon l'une des revendications 1 à 3, où ledit élément de fermeture annulaire (4) comprend une base (4a) et une portion centrale en saillie (4b) qui peut être introduite dans ladite cavité (3) entre les côtes internes (11) dudit talon (12) et peut être fixée auxdits côtés (11) et à une base (12a) dudit talon (12).

6. Bandage (1) selon la revendication 1, **caractérisé par le fait que** ledit corps (2) est réalisé par moulage par injection.
